Europäisches Patentamt

European Patent Office

Office européen des brevets

(19)

(11) **EP 1 538 464 A1**

(12) ## EUROPEAN PATENT APPLICATION

(43) Date of publication:
**08.06.2005 Bulletin 2005/23**

(51) Int Cl.7: **G01W 1/04**

(21) Application number: **04028490.3**

(22) Date of filing: **01.12.2004**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU**<br><br>(30) Priority: **02.12.2003 US 526329 P**<br><br>(71) Applicant: **Ewig Industries Co., Ltd.**<br>**Kwun Tong, Kowloon, Hong Kong (CN)** | (72) Inventor: **Yuen, Wai Man**<br>**Man On Sha (HK)**<br><br>(74) Representative: **Hössle Kudlek & Partner**<br>**Patentanwälte,**<br>**Postfach 10 23 38**<br>**70019 Stuttgart (DE)** |

(54) **Weather sensing station and associated methods**

(57)    In one embodiment, a weather sensing station includes one or more remote wireless sense units for sensing environmental conditions. A base station processes wireless signals from the wireless sense units and indicates the environmental conditions. A running display string may be used to display the data on a display string of the base station. Wireless sense units may include an air quality sense unit and, for example, a UV sensor. Air quality information and UV energy information may then be determined and displayed as data or indicated through graphical symbols.

FIG. 1

# EP 1 538 464 A1

**Description**

RELATED APPLICATIONS

This application claims priority to U.S. Provisional Patent Application No. 60/526,329, entitled "Weather Sensing Station and Associated Methods" and incorporated herein by reference.

BACKGROUND

Weather forecasting is often plagued by rapidly changing weather patterns and lengthy data collection and analysis. The result is that forecasts are often obsolete before reaching the public. Additionally, forecasting for large areas creates an averaging effect that may not accurately reflect localized conditions. Without access to current and local weather information, such as temperature, humidity, sun exposure, and the like, it is not uncommon for a person to be under or overdressed, to be caught in a rainstorm for lack of an umbrella, or to become sunburned on a cloudy day. Such behaviors can lead to illness, heat exhaustion, hypothermia, respiratory distress and even skin cancer.

Several environmental sensing systems are known in the prior art. By way of example, consider ultraviolet sensors, described in the following patents, each incorporated herein by reference: U.S. Patent No. 6,278,120; U.S. Patent No. 5,497,004; U.S. Patent No. 5,365,068; U.S. Patent No. 5,189,398; U.S. Patent No. 5,008,548; and U.S. Patent No. 4,065,672. Many of these sensors are handheld devices and the user is therefore exposed to the sun's radiation before learning if current conditions are harmful.

Several air quality sensors are also known in the prior art, such as described in the following patents, each incorporated herein by reference: U.S. Patent No. 6,432,367; U.S. Patent No. 6,314,789; U.S. Patent No. 6,249,100; U.S. Patent No. 6,206,775; U.S. Patent No. 6,055,848; U.S. Patent No. 5,971,067; U.S. Patent No. 5,954,577; U.S. Patent No. 5,520,328; U.S. Patent No. 5,511,006; and U.S. Patent No. 5,511,066. Some of these sensors have been incorporated, for example, into automobile ventilation systems.

Other environmental sensors, such as outdoor thermometers, are also known. These sensors often require connection between an indoor display and an outdoor sensor via a wire. Therefore, an unsightly wire connects between the temperature sensor, through the house door or cracked window, and the indoor display. Energy may be wasted when heated or cooled air escapes at an insulation break. Additionally, placement of the sensor near a house, which radiates or absorbs large amounts of energy, is necessitated by the wire. Therefore, outdoor temperature readings may be inaccurate.

SUMMARY

In one embodiment, a weather sensing station has an air quality sense unit for sensing air quality and communicating air quality information, an ultraviolet radiation sense unit for sensing ultraviolet energy and communicating ultraviolet energy information, and a base station for receiving the air quality information and ultraviolet energy information, the base station having a display and a controller, the display responsive to the controller to display data indicative of the air quality information and the ultraviolet energy information.

In another embodiment, a weather sensing station has one or more remote wireless sense units for sensing environmental conditions, and a base station for processing wireless signals from the wireless sense units into running digits on a display of the base station, to indicate the environmental conditions.

In another embodiment, a weather sensing station has an air quality sensor for detecting concentration of particles in an environment about the air quality sensor, and a base station for processing signals from the air quality sensor to categorize air quality of the environment, and for displaying data indicative of the air quality to users.

In another embodiment, a method reports air quality of an environment, including: determining concentration of particles in the environment; determining an air quality index based on the concentration; processing signals representing the air quality index to categorize the air quality index into one of a plurality of graphical icons; and indicating one of the graphical icons.

In another embodiment, a method reports environmental characteristics, including: sensing two or more of the characteristics, wirelessly transmitting data indicative of the characteristics to a remote base station, and processing the data for display as a running display string on the base station.

BRIEF DESCRIPTION OF THE FIGURES

FIG. 1 shows one exemplary weather sensing station that includes a base station and a plurality of remote sense units.

FIG. 2 illustrates one display embodiment for displaying sensed information from the remotes sense units of FIG. 1, in accord with one embodiment.

FIG. 3 illustrates one display embodiment that includes an area with a running display.

FIG. 4 shows a running display with a display area window.

FIG. 5 is a flowchart illustrating one exemplary process for receiving and displaying sensed environmental information.

FIG. 6 is a flowchart illustration one exemplary sub-process for updating the display of FIG. 1.

FIG. 7 is a flowchart illustrating one exemplary sub-process for scrolling sensed information from two or more remote sense units and/or internal sensors through an area of the display of a base station.

FIG. 8 is a flowchart illustrating one exemplary sub-process for producing a running display in one area of the display of a base station.

FIG. 9 is a flowchart illustrating one exemplary process for controlling a remote sense unit.

DETAILED DESCRIPTION OF THE FIGURES

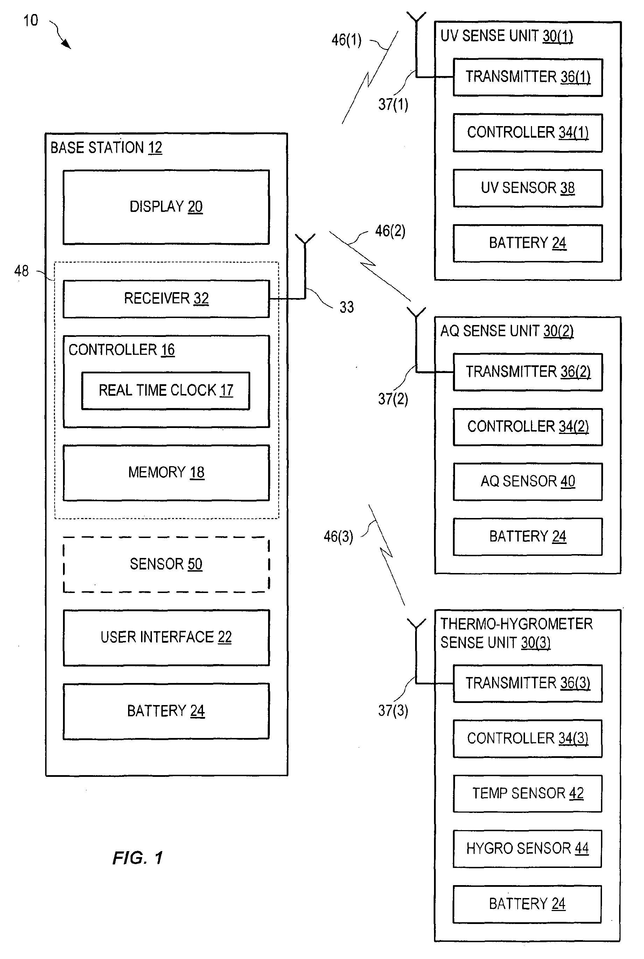

FIG. 1 shows one exemplary weather sensing station 10 with a base station 12 and a plurality of remote sense units 30. Weather sensing station 10 is illustratively shown with three sense units 30: an ultraviolet ("UV") remote sense unit 30(1), an air quality ("AQ") remote sense unit 30(2) and a thermo-hygrometer remote sense unit 30(3). UV remote sense unit 30(1) has a UV sensor 38 that determines the level of UV radiation being received by UV sensor 38. AQ remote sense unit 30(2) has an AQ sensor 40 that senses particulate matter in air, from which air quality may be determined. Thermo-hygrometer remote sense unit 30(3) has a temperature sensor 42 and a hygrometer sensor 44 that sense temperature and relative humidity, respectively. Each remote sense unit 30 also includes a transmitter 36, a controller 34 and a battery 24, as illustrated.
Controller 34(1) within UV remote sense unit 30(1) operates to measure UV intensity using UV sensor 38; it utilizes transmitter 36(1) to transmit the sensed information to base station 12 via radio wave 46(1). Controller 34(2) within AQ remote sense unit 30(2) operates to measure AQ using AQ sensor 40; it utilizes transmitter 36(2) to transmit sensed information to base unit 12 via radio waves 46(2). Controller 34(3) within thermo-hygrometer remote sense unit 30(3) operates to measure temperature and relative humidity with temperature sensor 42 and hygrometer sensor 44, respectively; it utilizes transmitter 36(3) to transmit sensed information to base unit 12 via radio waves 46(3).
Optionally, one or more of remote sense units 30 may include a display (e.g., LCD display) to indicate sensed information.
Base station 12 is illustratively shown with a controller 16, a receiver 32, a memory 18, a user interface 22, a display 20 and a battery 24. Controller 16 is, for example, a micro-controller, a microprocessor or an application specific integrated circuit ("ASIC"), and controls operation of base station 12. Display 20 is, for example, an LCD display. In the example of FIG. 1, controller 16 may store sensed information (received from remote sense units 30) in memory 18 and display this sensed information on display 20. Controller 16 is also shown with a real time clock (RTC) 17 that may provide current time and date information for one or more locales. Those skilled in the art appreciate that memory 18 may be incorporated within controller 16 as opposed to being a separate element as illustrated in FIG. 1.
Base station 12 also has a receiver 32 and an antenna 33, and each remote sense unit 30 has a transmitter 36 and an antenna 37. Each remote sense unit 30 transmits sensed information to base station 12 via radio waves 46. Base station 12 is shown with an optional sensor 50. Base station 12 may include one or more sensors that sense environmental conditions (e.g., temperature, humidity, pressure) proximate to base station 12.
User interface 22 allows a user to interact with controller 16 and may include a keypad or buttons that allow a user to select information for display and set and clear alarms, for example.
Batteries 24 provide power for weather sensing station 12 and remote sense units 30, as shown, although power may be provided by other suitable power sources (e.g., a power adaptor, solar power, etc.).
Base station 12 and/or units 30 may include a housing such as a water-proof plastic casing, to protect components and electronics therein. Apertures within the housing and gaskets may be used in locations of display (e.g., display 20) and/or user interface 22, for example, to provide access and/or viewing of these items through the housing.

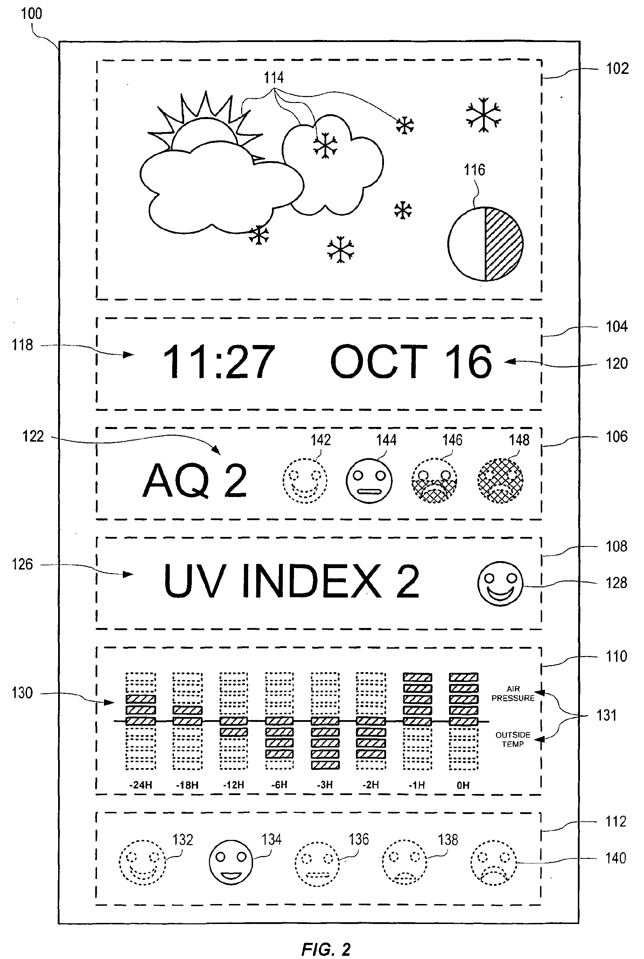

FIG. 2 illustrates one exemplary display 100 for displaying sensed information from remote sense units 30, FIG. 1. Display 100 is for example display 20, FIG. 1, according to one embodiment. Display 100 forms six separate display areas 102, 104, 106, 108, 110 and 112. Area 102 shows graphical symbols 114 that facilitate interpretation and assimilation of weather conditions, and a graphical representation 116 of the current phase of the moon. These weather conditions may, for example, be determined by one or more algorithms within controller 16 that utilize previous and current information from one or more remote sense units 30 or sensors 50. The moon phase is determined from date information of RTC 17 within controller 16, for example.

Area 104 displays time 118 and date 120 information. Area 104 may be configured to display time and date information 118, 120 in alternate formats, as selected by a user. For example, area 104 may display time and date for other locales, selectable by a user.

Area 106 is illustratively shown displaying an air quality indicator 122 determined from AQ remote sense unit 30(2). Area 106 also shows four face symbols 142, 144, 146 and 148 that provide a graphical representation of current air quality: face symbol 142 may be displayed when measured air quality is good, face symbol 144 may be displayed when sensed air quality is fair, face symbol 146 may be displayed when sensed air quality is poor and face symbol 148 may be displayed when sensed air quality is very poor. People with respiratory problems, for example, may find that a local indication of current air quality important to their daily lives, and may find face symbols useful in quickly interpreting current air quality.

In one embodiment, sensed information from other remote sense units 30 may be selected by a user for display in area 106. For example, sensed temperature and relative humidity information from remote sense unit 30(3) and air quality information may be alternately displayed in area 106.

Area 108 is illustratively shown displaying sensed information received by base station 12 from UV remote sense unit 30(1) of FIG. 1. A UV index display string 126 is illustratively displayed within area 108 and a symbol 128 illustratively indicates a comfort level for this sensed information. For example, a happy face may be used to indicate a low UV index since there is low risk of harm from the UV levels at the location of remote sense unit 30(1).

In one embodiment, area 108 may display sensed information from other remote sense units 30. For example, a user may selectively display information from a remote sense unit 30 in display in area 108. A comfort level of this sensed information may be indicated using symbol 128.

Area 110 is illustratively shown with a bar graph 130 that indicates change in sensed information received from a selected remote sense unit 30, or a sensor 50 internal to base station 12, over a time period (e.g., a 24-hour period). Bar graph 130 may, for example, display changes in pressure, temperature or relative humidity as selected by the user. Indicators 131 may indicate the information currently displayed on bar graph 130. In one example, controller 16 may store sensed information within memory 18 for the previous 24-hour period.

Air pressure sensed by a pressure sensor internal to base station 12 may be stored in memory 18 and selectively retrieved for display on bar graph 130 such that bar graph 130 displays relative change in air pressure over a previous 24 hour period, for example, thereby visually indicating a pressure change trend. As appreciated, other forms of graph or chart may be utilized within area 110 to indicate trends in sensed information.

Area 112 is shown illustratively displaying a graphical representation of current comfort level that is based upon sensed information received within base station 12 from one or more internal sensors 50 of base station 12 and/or from one or more remote sense units 30. Area 112 has five exemplary graphical symbols 132, 134, 136, 138 and 140 that indicate current comfort level determined from sensed information. In this example, symbols 132, 134, 136, 138 and 140 represent a face that is very happy, happy, indifferent, sad and very sad, respectively. The very happy symbol 132 indicates a very high level of comfort, and the very sad symbol 140 indicated a very poor level of comfort.

Display 100 may include fewer or more display areas and may include other display functionality. For example, as other types of sensed information are received, display 100 may include other display functionality.

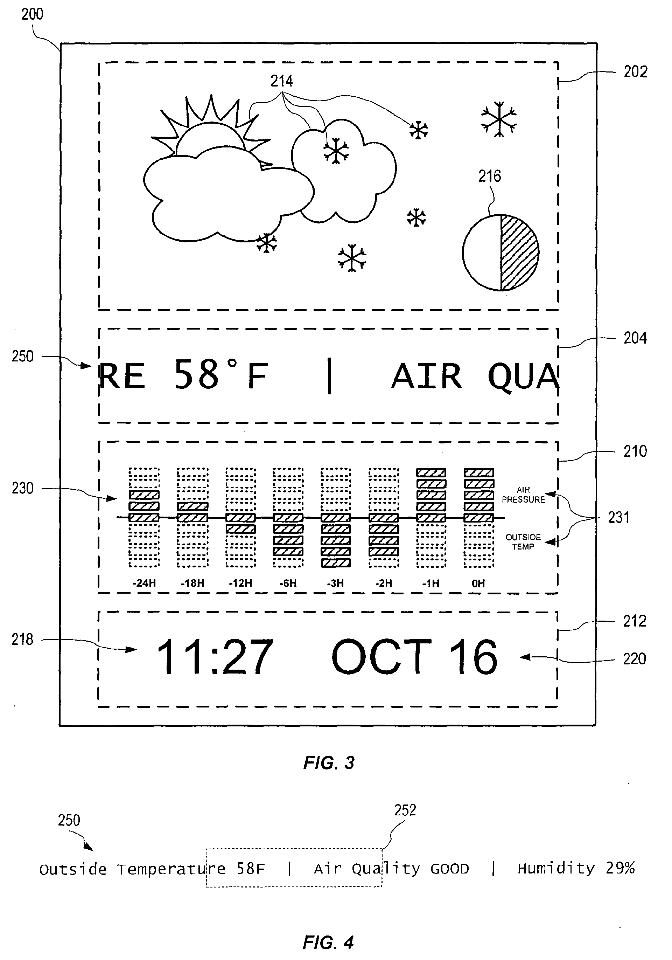

FIG. 3 illustrates one exemplary display embodiment 200 that may, for example, represent display 20 of FIG. 1. Display 200 is illustratively shown with four display areas 202, 204, 206 and 208. Area 202 is, for example, similar to area 102 of display 100, FIG. 2, and illustratively shows a graphical representation of current weather conditions. Area 204 is illustratively shown displaying part of a running display string 250, also shown in FIG. 4. In FIG. 4, running display string 250 is shown with a display area window 252 that represents the part of running display string 250 currently displayed within area 204.

In this example, running display string 250 is text based and scrolls horizontally through area 204; the user may thereby view a longer string than will concurrently fit within display area 204 as it is scrolled through area 204. Running display string 250 contains textual representations of sensed information from three remote sense units 30 of FIG. 1: outside air temperature is indicated as 58°F, air quality is indicated as 'good' and relative humidity is indicated as 29%. Window 252 of FIG. 4 represents the displayed part of running display string 250 within area 204. As running display string 250 scrolls horizontally, from right to left through area 204, the entire text content of running display string 250 is displayed within area 204. Other information may also be compiled within running display string 250 for display in area 204. For example, a predicted weather forecast may be determined from change in sensed information and displayed within area 204.

In one embodiment, area 204 scrolls in character increments; that is, at one time the contents of area 204 may shift left one character position, and a next character from running display string 250 inserted in the right hand end of area 204. In another embodiment, area 204 scrolls in pixel increments; that is, at one time, the contents of area 204 shifts left one pixel, and the next column of pixels is loaded from running display string 250. In either technique, a smooth scrolling effect is achieved.

Area 210 contains a bar graph 230 and indicators 231 that may, for example, represent area 110 of FIG. 2. Area 212 shows a time display 218 and a date display 220 and may, for example, represent area 112 of FIG. 2.

In one example of operation, the user may select sensed information from one or more remote sense units 30 and sensor 50 for inclusion in running display string 250.

Base station 12, FIG. 1, may also allow the user to set one or more alarms. For example, base station 12 may include one or more buttons that allow the user to interact with controller 16 and display 20 to set the alarms. These alarms may, for example, be: time based, time and date based, internal temperature based, humidity based, UV index based, and/or air quality based. In one example, a user may set an alarm such that when temperature sensed by a remote sense unit (e.g., remote sense unit 30(3)) rises above a user-specified threshold, an alarm action occurs such as a sound is made by base station 12 and/or the displayed temperature on display 20 flashes. In another example, the user may set an alarm such that when air quality, sensed by remote sense unit 30(2), is poor, an alarm sounds and/or the air quality index on display 20 flashes.

Once an alarm action occurs, the action may be cancelled by the user by, for example, pressing a button on base station 12.

In one embodiment, an alarm may be triggered when power of battery 24 within a remote sense unit 30 is running low, thereby indicating to the user that the battery should be changed. Similarly, an alarm may be triggered when power level of battery 24 within base station 12 is running low.

In another embodiment, the user may specify a relative humidity threshold such that an alarm is triggered when humidity falls below the specified threshold.

As appreciated, temperature, humidity, UV and air quality alarms may be specified with upper and lower bounds such that the alarm is triggered when the sensed value falls outside the specified range.

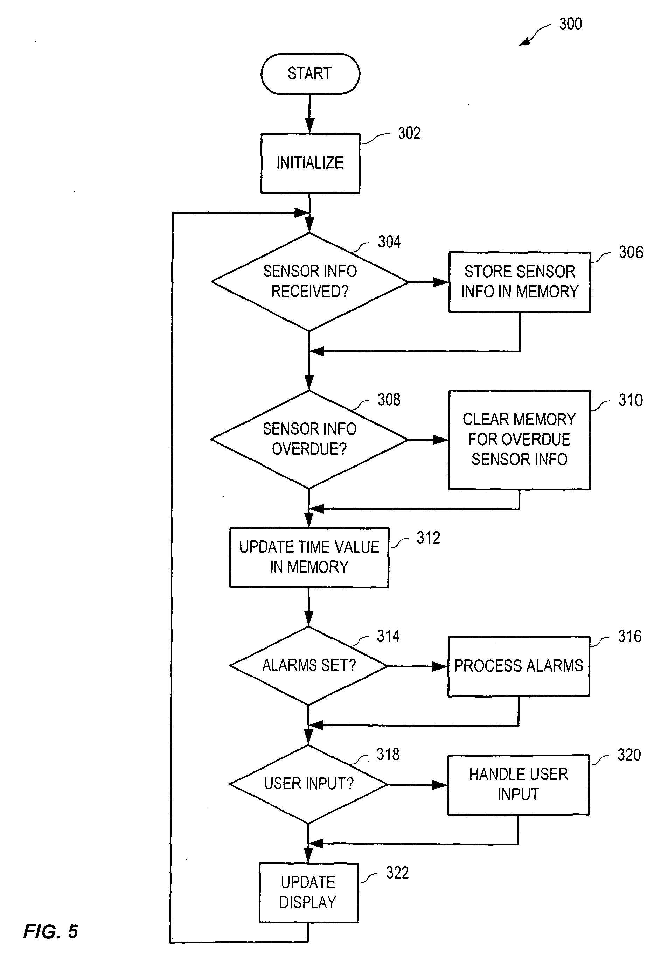

FIG. 5 is a flowchart illustrating one exemplary process 300 for receiving and displaying sensed information. Process 300 is, for example, implemented by controller 16 of base station 12, FIG. 1. In step 302, process 300 is initialized. In one example of step 302, controller 16 clears memory 18, initializes receiver 32 and clears display 20. Step 304 is a decision. If, in step 304, sensed information is received from a remote sensor, process 300 continues with step 306; otherwise process 300 continues with step 308. In one example of step 304, controller 16 determines that sensed information is received, via receiver 32, from remote sense unit 30 (1) .

In step 306, process 300 stores the sensed information received in step 304 within memory for later use. In one example of step 306, controller 16 stores sensed information received from remote sense unit 30(1) in a location of memory 18 allocated to remote sense unit 30(1). Memory 18 may, for example, have memory locations reserved for each remote sense unit 30 and sensor 50. Process 300 continues with step 308.

Step 308 is a decision. If, in step 308, process 300 determines that sensed information is overdue, process 300 continues with step 310; otherwise process 300 continues with step 312. In one example of step 308, controller 16 determines that sensed information from remote sense unit 30(2) has not been received within a certain period of time and continues with step 310. Controller 16 may, for example, maintain timers that measure periodicity of sensed information received from each remote sense unit 30, and may thereby determine when sensed information is overdue.

In step 310, process 300 cleared the memory location reserved for the overdue sensed information determined in step 308. In one example of step 310, process 300 clears a location within memory 18 reserved for sensed information of remote sense unit 30(2). Process 300 continues with step 312.

In step 312, process 300 updates the current time within memory. In one example of step 312, controller 16 utilizes a timer maintain real-time clock information within memory 18. In one embodiment, controller 16 implements an interrupt routine based upon an external hardware timer to maintain accuracy of this clock information. In another embodiment, real-time clock information may be maintained by hardware such that controller 16 need only read the real time clock information from the hardware in step 312.

Step 314 is a decision. If, in step 314, process 300 determines that alarms are set, process 300 continues with step 316; otherwise process 300 continues with step 318. In one example of step 314, controller 16 determines that a temperature alarm is set for remote sense unit 30(3), and continues with step 316. In one embodiment, step 314 is omitted and step 316 is always implemented such that alarms are always processed.

In step 316, a sub-process is invoked to process set alarms. In one example of step 316, controller 16 compares sensed information from sense unit 30(3) against a user defined temperature level, and if exceeded, an alarm action is taken. This alarm action may, for example, include an audible warning and flashing displayed sensed information.

Process 300 continues with step 318.

Step 318 is a decision. If, in step 318, process 300 detects user input, process 300 continues with step 320; otherwise process 300 continues with step 322. In one example of step 318, controller 16 detects that the user has pressed a button of user interface 22 on base station 12 and proceeds with step 320.

In step 320, process 300 handles user input detected in step 318. In one example of step 320, a state machine is implemented within controller 16 to process user input from user interface 22. This state machine may, for example, allow the user to select information from one or more remote sense units 30 for display on display 20 and may also allow the user to set and clear alarm thresholds. Process 300 continues with step 322.

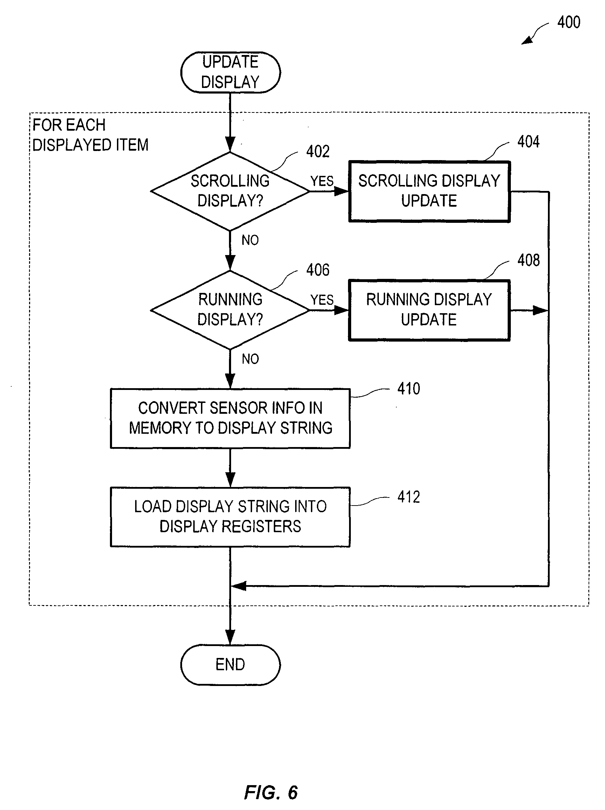

In step 322, process 300 invokes sub-process 400 of FIG. 6, to update display 20. In one example of step 322, controller 16 invokes sub-process 400 to read sensed information from memory 18, convert it to the format for display and write the converted data to registers of display 20. Sub-process 400 may, for example, implement scrolling and running displays (e.g., per FIG. 4) on display 20.

Steps 304 through 322 are repeated to maintain operation of base station 12. As appreciated, the order of steps 304 through 322 may vary without departing from the scope hereof.

FIG. 6 is a flowchart illustration one exemplary sub-process 400 for updating display 20, FIG. 1. Sub-process 400 is, for example, implemented by controller 16 of base station 12, FIG. 1. Steps 402 through 412 of sub-process 400 are repeated for each area of display 20. Sub-process 400 is one exemplary process for updating display 20. As appreciated, other process structures may be implemented without departing from the scope hereof.

Step 402 is a decision. If, in step 402, sub-process 400 determines that the formatted information is to be scrolled in the current area of the display, sub-process 400 continues with step 404; otherwise sub-process 400 continues with step 406. In one example of step 402, controller 16 determines that sensed information of remote sense unit 30(2) is displayed in area 106 of display 100 and that this sensed information is scrolled. Therefore, controller 16 continues with step 404.

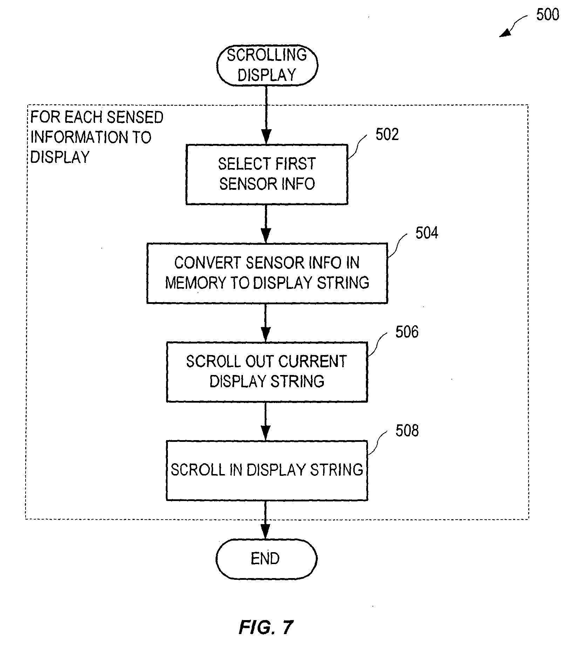

In step 404, sub-process 400 invokes sub-process 500 of FIG. 7 to scroll sensed information items through the display area.

Step 406 is a decision. If, in step 406, sub-process 400 determines that the formatted information is to be scrolled in the current area of the display, sub-process 400 continues with step 404; otherwise sub-process 400 continues with step 406. In one example of step 402, controller 16 determines that sensed information of remote sense unit 30(2) is displayed in area 106 of display 100 upon display 20 and that this sensed information is scrolled. Therefore, controller 16 continues with step 404.

In step 410, sub-process 400 converts sensed information into a format for display. In one example of step 410, controller 16 reads sensed information, stored in memory in step 306 of process 300, from memory 18 and converts it into a format for display upon display 20. The formatted information may, for example, be stored temporarily in memory 18.

In step 412, sub-process 400 loads converted sensor information of step 410 into registers of the display. In one example of step 412, controller 16 reads converted information from memory 18 and loads registers of display 20.

Steps 402 through 412 may repeat for each display area of display 20. In one example, steps 402 through 412 repeat for areas 102 through 112 of display 100.

FIG. 7 is a flowchart illustrating one exemplary sub-process 500 for scrolling sensed information from two or more remote sense units 30 and/or internal sensors 50 through an area of a display. Controller 16 implements process 500 to scroll sensed information through one or more areas 102-112 of display 20, for example.

In step 502, sub-process 500 selects a first sensor information for display in the area selected by sub-process 400. In one example of step 502, controller 16 selects sensed information from remote sense unit 30(3) for display in area 106 of display 100. In step 504, sub-process 500 converts the sensed information selected in step 502 into a display string. In one example of step 504, controller 16 converts sensed information, stored into memory 18 in step 306 of process 300 for example, into a display string 126 suitable for display in area 108 of display 100.

In step 506, sub-process 500 scrolls the display string currently displayed in the area. In one example of step 506, controller 16 may, for example, scroll any existing display text out of area 108 of display 100. In another example, controller 16 may instruct display 20 to scroll display string 126 vertically out of area 108, and display 20 may include specific functionality to do this. In another example, controller 16 may shift display string 126 vertically, one row of pixels at a time, within area 108 to effect scrolling.

In step 508, new sensor information, converted in step 504, is scrolled into the area selected by sub-process 400. In one example of step 508, controller 16 writes the display string created in step 504 to a register of display 20 and then instructs display 20 to scroll the register contents into area 108. In another example, controller 16 updates display area 108, via registers of display 20, by graphically shifting pixels into area 108, one row at a time, from the display string created in step 504, thus effecting scroll of the area.

Steps 502 through 508 may repeat for sensed information of each sense unit and/or internal sensor selected for display in the current area. For example, if remote sense units 30(1) and 30(2) are selected for display in area 108 of display 100, steps 502 through 508 alternately select sensed information from remote sense units 30(1) and 30(2), convert the selected sensed information into a display string and then scroll the display string into area 108. As appreciated, timing for this scrolling may vary without departing from the scope hereof.

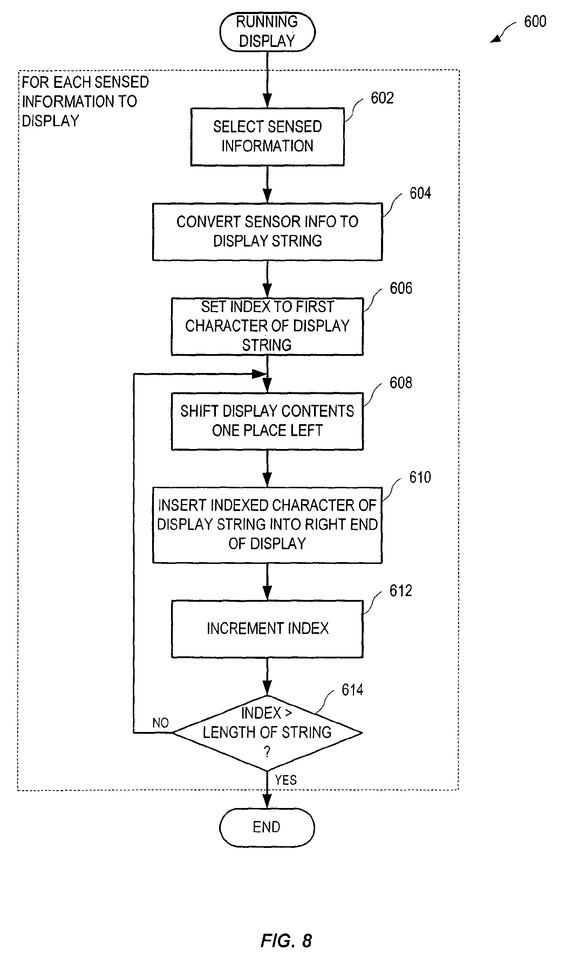

FIG. 8 is a flowchart illustrating one exemplary sub-process 600 for producing a running display in one area of display 20. Controller 16, FIG. 1, may implement sub-process 600, for example, to display sensed information from one or more remote sense units 30 and/or internal sensors 50.

In step 602, sub-process 600 selects sensed information for display. In one example of step 602, controller 16 selects sensed information received from remote sense unit 30(2) and stored within memory 18 in step 306 of process 300.

In step 604, sub-process 600 converts the sensed information selected in step 602 into a display string. In one example of step 604, controller 16 converts sensed information into running display string 250.Where sensed information from more than one remote sense unit is to be displayed in the selected area of sub-process 400, additional sensed information may be converted and added to running display string 250, as shown in FIG. 4.

In step 606, an index is set to the first character of the running display string. For example, in step 606, controller 16 sets an index (e.g., stored within memory 18 or within a register of controller 16) to the first character of running display string 250.

In step 608, sub-process 600 shifts displayed area one character to the left. In step 610, sub-process 600 inserts the indexed character of running display string 250 into the right end character display position of the selected area. In one example of steps 608 and 610, controller 16 selects the indexed character of running display string 250 and writes it to a register of display 20. Display 20 may then automatically scroll area 108 left and insert the character into the right most character position of area 108. In another example, controller 16 instructs display 20 to scroll area 108 one character left, and then inserts the indexed character of running display string 250 into the right-most character position of area 108. In another example, controller 16 may implement a pixel by pixel shift of area 108, and insert the indexed character of running display string 250 into the right most character position on column of pixels at a time, thereby implementing a smooth running display. Other methods of implementing a running display may be implemented by controller 16 without departing from the scope hereof.

In step 612, sub-process 600 increments the index to identify the next character if running display string 250 for display. In one example of step 612, controller 16 increments the index within memory 18 or within an internal register of controller 16.

Steps 608 through 612 may repeat to run all characters of running display string 250 through area 108, for example. In one embodiment, sub-process 600 continuously runs the running display string through the selected area of display 20, restarting at the beginning of the running display string when the end is reached. Further, running display string 250 may, for example, be updated with new sensed information when received from a remote sense unit 30 and/ or an internal sensor 50.

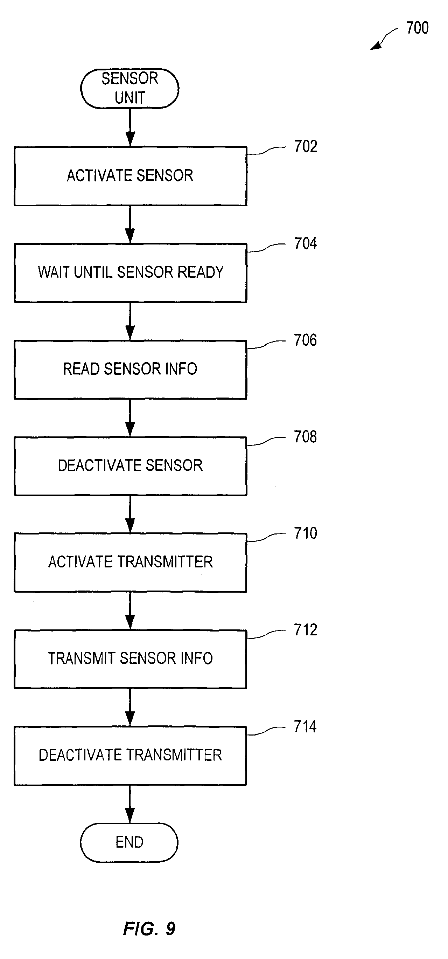

FIG. 9 is a flowchart illustrating one exemplary process 700 for controlling a remote sense unit. Sub-process 700 is, for example, implemented within one or more controllers 34 of remote sense units 30, FIG. 1.

In step 702, sub-process 700 activates a sensor. In one example of step 702, controller 34(1) activates UV sensor 38 by applying power to UV sensor 38.

In step 704, sub-process 700 waits until the sensor activated in step 702 is stable. In one example of step 704, controller 34 includes timer functionality and waits for a time specified by a manufacturer of the sensor, for example, before continuing.

In step 706, sub-process 700 reads sensed information from the sensor activated in step 702. In one example of step 706, controller 34 reads sensed information from UV sensor 38. Such sensed information may be determined using analog-to-digital converters, or may be red digitally from the sensor.

In step 708, sub-process 700 deactivates the sensor activated in step 702. In one example of step 708, controller 34 removes power from UV sensor 38 to conserve power of batter 24.

In step 710, sub-process 700 activates a transmitter. In one example of step 710, controller 34(1) activates transmitter 36(1) by applying power to transmitter 36(1) from batter 24.

In step 712, sub-process 700 transmits sensed information using the transmitter activated in step 710. In one example of step 712, controller 34(1) sends sensed information, read from UV sensor 38, to transmitter 36(1), which transmits the sensed information to base station 12.

In step 714, sub-process 700 deactivates the transmitter activated in step 710. In one example of step 714, controller 34(1) disconnects transmitter 36(1) from battery 24.

Steps 702 through 714 may repeat periodically to update base station 12 with sensed information from one or more sensed within each remote sense unit 30.

Equation 1 Particulate Concentration

$$\text{Concentration} = \frac{\text{low pulse time from sensor}}{30 \text{ seconds}} \times 100\%$$

Equation 1 Particulate Concentration shows one equation for calculating concentration of particles within the air (Concentration) from a signal received from a particulate matter sensor. From this Concentration, a quantity of particulate matter may be determined as follows (in pieces per 283ml):

If Concentration is ≤ 13%, then Quantity = 61539 * Concentration
If Concentration > 13% then Quantity = 107692 * Concentration - 6000

This Quantity may then be used to determine an air quality index as follows:

$$\text{If Quantity} \leq 3000 \text{ pcs/283ml then } \text{AQI} = \frac{\text{Quantity}}{75} \times \frac{100}{40}$$

$$\text{If Quantity} > 3000 \text{ pcs/283ml then}$$

$$\text{AQI} = \left( \text{Quantity} \times \frac{12}{1700} + 18.8 \right) \times \frac{100}{40}$$

Table 1 Determine Air Quality shows a relationship between Concentration, Quantity, Air Quality Index (AQI), Health Level and representative symbol values. For example, a concentration value between 2.49 and 4.9% equates to a Quantity between 1530 and 3000 particles per 283ml and has an AQI value between51 and 100. This may, for example, be displayed on display 20 as an AQI, or may be indicated by a Health Index of 2, or by a face symbol.
In one embodiment, Equation 1 Particulate Concentration is evaluated by controller 16 of base station 12, FIG. 1, upon receipt of sensed information from a remote sense unit 30(2) that measures particulate matter within the air using AQ sensor 40. In another embodiment, Equation 1 Particulate Concentration is evaluated by controller 34(2) of remote sense unit 30(2) such that one or more of AQI, Health level or face symbol selection is transmitted to base station 12 via transmitter 36(2).
The healthy level, AQI value and colors may be determined from the EPA "Guideline for Reporting of Daily Air Quality - Air Quality Index (AQI)", U. S. Environmental Protection Agency, Office of Air Quality Planning and Standards, North Carolina 27711. Faces 1-4 correspond to happy, normal, painful and dying symbols (e.g., symbol 128 of area 108, FIG. 2), respectively. Symbol 128 thus indicated air quality based upon determined particulate matter concentrations measured within air.

Table 1

| Determine Air Quality | | | | | |
|---|---|---|---|---|---|
| Face | Healthy Level | AQI Value | Concentration (%) | Quantity (PN) (pcs/283ml) | Colors |
| 1 | 1 | 0-50 | 0-2.44 | 0-1500 | Green |
| 2 | 2 | 50.5 | 2.46 | 1515 | Yellow |
|  |  | 51-100 | 2.49-4.9 | 1530-3000 |  |
|  | 3 | 100.5 | 4.92 | 3028 | Orange |
|  |  | 101-150 | 5.0-9.5 | 3060-5837 |  |
| 3 | 4 | 150.5 | 9.53 | 5865 | Red |
|  |  | 151-200 | 9.6-14.1 | 5893-8670 |  |
|  | 5 | 200.5 | 14.13 | 8698 | Purple |
|  |  | 201-300 | 14.2-23.3 | 8727-14336 |  |

Table 1   (continued)

| Determine Air Quality | | | | | |
|---|---|---|---|---|---|
| Face | Healthy Level | AQI Value | Concentration (%) | Quantity (PN) (pcs/283ml) | Colors |
| 4 | 6 | 300.5 | 23.34 | 14364 | Maroon |
| | | 301 | 23.4 | 14393 | |
| ** Quantity$_{max}$=61538, AQI$_{max}$=1133, Concentration$_{max}$=100% | | | | | |

** During measurement in the test mode, every five seconds the unit may calculate the Quantity (PN) and use the total of the past thirty seconds. (If the test time is less than thirty seconds, the low pulse time of the first five seconds will be added to have thirty seconds of data.)

*** If the Concentration is less than 1% and larger the 0%, 1% will be displayed. In all other cases, the unit may display the concentration value rounded to the nearest whole digit.

Changes may be made in the above methods and systems without departing from the scope hereof. It should thus be noted that the matter contained in the above description or shown in the accompanying drawings should be interpreted as illustrative and not in a limiting sense. The following claims are intended to cover all generic and specific features described herein, as well as all statements of the scope of the present method and system, which, as a matter of language, might be said to fall there between.

**Claims**

1.   A weather sensing station, comprising:

   an air quality sense unit for sensing air quality and communicating air quality information;
   an ultraviolet radiation sense unit for sensing ultraviolet energy and communicating ultraviolet energy information;
   a base station for receiving the air quality information and ultraviolet energy information, the base station having a display and a controller, the display responsive to the controller to display data indicative of the air quality information and the ultraviolet energy information.

2.   The station of claim 1, further comprising an ambient temperature sensor for sensing temperature and communicating temperature information to the base station, the display responsive to the controller to display data indicating one or more of the air quality information, the ultraviolet energy information and the temperature information .

3.   The station of claim 1 or 2, further comprising a humidity sense unit for sensing humidity and communicating humidity information to the base station, the display responsive to the controller to display data indicative one or more of the air quality information, the ultraviolet energy information and the humidity information.

4.   The station of any one of the preceding claims, further comprising a real time clock and two or more graphical symbols representing moon phase, one of the graphical symbols responding to the controller to indicate current moon phase in response to time from the real time clock.

5.   The station of any one of the preceding claims, further comprising an alarm, the controller operating the alarm if one or both of the ultraviolet energy information and air quality information pass a threshold.

6.   The station of any one of the preceding claims, further comprising a user interface including one or more buttons, the controller responsive to user interaction with the buttons to display one or both of the air quality information and the ultraviolet energy information, and/or comprising one or more symbols responsive to the controller to indicate weather conditions, especially face symbols.

7.   The station of any one of the preceding claims, the base station operable to generate a running digit string of data on the display.

8.   The station of any one of the preceding claims, the running digit string comprising one or both of the air quality information and the ultraviolet energy information.

9. The station of claim 1, one or more of the base station, ultraviolet radiation sense unit and air quality sense unit being powered by battery, and/or further comprising a user interface having a key pad, whereby a user may enter calibration data and preferences to the base station, and/or further comprising one or more alarms, and/or the alarms especially indicating a particular time and/or one or both of a level of ultraviolet radiation and a quantity of particulate matter.

10. The station of any one of the preceding claims, further comprising at least one additional remote sense unit for communicating weather conditions to the base station.

11. The station of claim 10, wherein the remote sense unit comprises a temperature sensor, the weather conditions comprising temperature, the display responsive to the controller to display data indicative of the air quality information, the ultraviolet energy information and temperature.

12. The station of any one of the preceding claims, the base station, the ultraviolet radiation sense unit and air quality sense unit communicating by wireless communications.

13. A weather sensing station, comprising:

   one or more remote wireless sense units for sensing environmental conditions; and
   a base station for processing wireless signals from the wireless sense units into running digits on a display of the base station, to indicate the environmental conditions.

14. The weather sensing station of claim 13, the remote wireless sense units comprising one or more of: air quality sense unit, ultraviolet sense unit, humidity sense unit, temperature sense unit, pressure sense unit, and/or the base station comprising a display, the base station operable to scroll data indicative of the environmental conditions as a running display string on the display.

15. A weather sensing station, comprising:

   an air quality sensor for detecting concentration of particles in an environment about the air quality sensor; and

   a base station for processing signals from the air quality sensor to categorize air quality of the environment, and for displaying data indicative of the air quality to users.

16. The weather sensing station of claim 15, the base station processing the signals to categorize air quality according to EPA guidelines, and/or the base station displaying data as graphical icons indicating the air quality, and/or the air quality sensor transmitting the signals as wireless data to the base station, and/or the base station comprising a display, the base station operable to scroll data indicative of the data as a running display string on the display.

17. A method of reporting air quality of an environment, comprising:

   determining concentration of particles in the environment;

   determining an air quality index based on the concentration;

   processing signals representing the air quality index to categorize the air quality index into one of a plurality of graphical icons; and

   indicating one of the graphical icons.

18. The method of claim 17, further comprising the step of wirelessly transmitting the air quality index to a base station and/or further comprising the step of wirelessly transmitting data indicative of the concentration to a base station, and processing the data in the base station to determine the air quality index. and/or the step of determining air quality index comprising converting the concentration to the air quality index EPA guidelines, and/or further comprising displaying one or more of the air quality index and the concentration on a display.

**19.** The method of claim 18, further comprising displaying the air quality index and concentration as a running display string.

**20.** The method of any one of claims 7 - 19, further comprising sensing at least one other environmental characteristic and displaying the environmental characteristic as a running display string, the environmental characteristic especially comprising one of temperature, pressure, humidity, ultraviolet radiation.

**21.** A method for reporting environmental characteristics, comprising:

sensing two or more of the characteristics;

wirelessly transmitting data indicative of the characteristics to a remote base station; and

processing the data for display as a running display string on the base station.

**22.** The method of claim 21, the step of sensing comprising sensing ultraviolet radiation and temperature, and/or the step of sensing comprising sensing concentration of particles in the environment and indexing the concentration to an air quality index in accordance with EPA guidelines.

**23.** The method of claim 22, further comprising indicating at least one graphical icon representative of a current air quality index.

**24.** The method of any one of claims 21 - 23, further comprising forecasting weather based on the sensed characteristics and displaying at least one graphical icon, at the base station, that is indicative of forecasted weather.

10

BASE STATION 12

DISPLAY 20

48

RECEIVER 32

CONTROLLER 16

REAL TIME CLOCK 17

MEMORY 18

SENSOR 50

USER INTERFACE 22

BATTERY 24

33

46(1)

37(1)

UV SENSE UNIT 30(1)

TRANSMITTER 36(1)

CONTROLLER 34(1)

UV SENSOR 38

BATTERY 24

46(2)

37(2)

AQ SENSE UNIT 30(2)

TRANSMITTER 36(2)

CONTROLLER 34(2)

AQ SENSOR 40

BATTERY 24

46(3)

37(3)

THERMO-HYGROMETER SENSE UNIT 30(3)

TRANSMITTER 36(3)

CONTROLLER 34(3)

TEMP SENSOR 42

HYGRO SENSOR 44

BATTERY 24

*FIG. 1*

*FIG. 2*

200

202

214

216

204

250 → RE 58°F | AIR QUA

210

230 →

231

| AIR PRESSURE |
| OUTSIDE TEMP |

-24H  -18H  -12H  -6H  -3H  -2H  -1H  0H

212

218 → 11:27  OCT 16 ← 220

**FIG. 3**

250

252

Outside Temperature 58F | Air Quality GOOD | Humidity 29%

**FIG. 4**

300

**FIG. 5**

400

FIG. 6

500

SCROLLING
DISPLAY

FOR EACH SENSED
INFORMATION TO
DISPLAY

502

SELECT FIRST
SENSOR INFO

504

CONVERT SENSOR INFO IN
MEMORY TO DISPLAY STRING

506

SCROLL OUT CURRENT
DISPLAY STRING

508

SCROLL IN DISPLAY STRING

END

*FIG. 7*

*FIG. 8*

700

```
      ┌─────────────┐
      │   SENSOR    │
      │    UNIT     │
      └──────┬──────┘
             │
             ▼
   ┌───────────────────┐
   │  ACTIVATE SENSOR  │  ─── 702
   └─────────┬─────────┘
             │
             ▼
   ┌────────────────────────┐
   │ WAIT UNTIL SENSOR READY│  ─── 704
   └────────────┬───────────┘
                │
                ▼
   ┌────────────────────┐
   │  READ SENSOR INFO  │  ─── 706
   └──────────┬─────────┘
              │
              ▼
   ┌────────────────────┐
   │  DEACTIVATE SENSOR │  ─── 708
   └──────────┬─────────┘
              │
              ▼
   ┌─────────────────────────┐
   │  ACTIVATE TRANSMITTER   │  ─── 710
   └────────────┬────────────┘
                │
                ▼
   ┌─────────────────────────┐
   │  TRANSMIT SENSOR INFO   │  ─── 712
   └────────────┬────────────┘
                │
                ▼
   ┌──────────────────────────┐
   │  DEACTIVATE TRANSMITTER  │  ─── 714
   └────────────┬─────────────┘
                │
                ▼
         ┌────────────┐
         │    END     │
         └────────────┘
```

*FIG. 9*

**European Patent Office**

## EUROPEAN SEARCH REPORT

Application Number

EP 04 02 8490

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 197 05 117 A1 (SIEMENS AG, 80333 MUENCHEN, DE; SIEMENS AG) 13 August 1998 (1998-08-13) | 1-3,5,6, 9-12,15, 16,21-24 | G01W1/04 |
| Y | * column 1, line 1 - line 8 * <br><br> * column 1, line 24 - line 60 * <br> ----- | 4,7,8, 13,14 | |
| X | US 5 995 862 A (GALLORINI ET AL) 30 November 1999 (1999-11-30) * figure 1 * <br> ----- | 1-3,10, 11 | |
| Y | US 2003/058287 A1 (STANLEY RANDY P) 27 March 2003 (2003-03-27) * abstract * <br> ----- | 4 | |
| D,Y | PATENT ABSTRACTS OF JAPAN vol. 2000, no. 09, 13 October 2000 (2000-10-13) & JP 2000 156889 A (DENSO CORP), 6 June 2000 (2000-06-06) * abstract * <br> ----- | 7,8,13, 14,19,20 | |
| | | | TECHNICAL FIELDS SEARCHED (Int.Cl.7) |
| X | US 5 255 556 A (LOBDELL ET AL) 26 October 1993 (1993-10-26) | 15-18 | G01W |
| Y | * abstract * * column 1, line 6 - line 36 * * claim 1 * <br> ----- | 19,20 | G01J |

The present search report has been drawn up for all claims

| Place of search | Date of completion of the search | Examiner |
|---|---|---|
| Munich | 31 January 2005 | Jacquin, J |

EPO FORM 1503 03.82 (P04C01)

**ANNEX TO THE EUROPEAN SEARCH REPORT
ON EUROPEAN PATENT APPLICATION NO.**

EP 04 02 8490

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2005

| Patent document cited in search report | | Publication date | Patent family member(s) | | Publication date |
|---|---|---|---|---|---|
| DE 19705117 | A1 | 13-08-1998 | NONE | | |
| US 5995862 | A | 30-11-1999 | IT | FI960113 A1 | 17-11-1997 |
| US 2003058287 | A1 | 27-03-2003 | NONE | | |
| JP 2000156889 | A | 06-06-2000 | NONE | | |
| US 5255556 | A | 26-10-1993 | NONE | | |

EPO FORM P0459

For more details about this annex : see Official Journal of the European Patent Office, No. 12/82